# FASCICULE DE BREVET EUROPEEN

(11) **EP 1 092 459 B1**
(45) Date de publication et mention de la délivrance du brevet: **21.09.2005**
(21) Numéro de dépôt: 00402822.1
(22) Date de dépôt: 12.10.2000
(51) Int. Cl.: B01D 9/00

(54) **Procédé et dispositif de purification de produits organiques par cristallisation fractionnée à vitesse de circulation variable**
Verfahren und Vorrichtung zur Reinigung von organischen Stoffen durch fraktionierte Kristallisation mit variabler Strömungsgeschwindigkeit
Process and apparatus for purifying organic materials by fractional crystallisation with variable flow velocity

(30) Priorité: 12.10.1999 FR 9912716
(43) Date de publication de la demande: 18.04.2001
(73) Titulaire: BEFS PROKEM (Société Anonyme), 68100 Mulhouse (FR)
(72) Inventeur: Genin, René, 68200 Mulhouse (FR); Schwartzman, Edouard, 75015 Paris (FR); Drouglazet, Guenael, 68260 Kingersheim (FR)
(74) Mandataire: Breese, Pierre

(56) Documents cités:
- EP-A- 0 616 998
- US-A- 4 493 719

## Description

La présente invention concerne un procédé de purification d'un produit organique par cristallisation fractionnée à vitesse de circulation variable. L'invention se rapporte aussi à un procédé pour la mise en oeuvre de ce procédé.

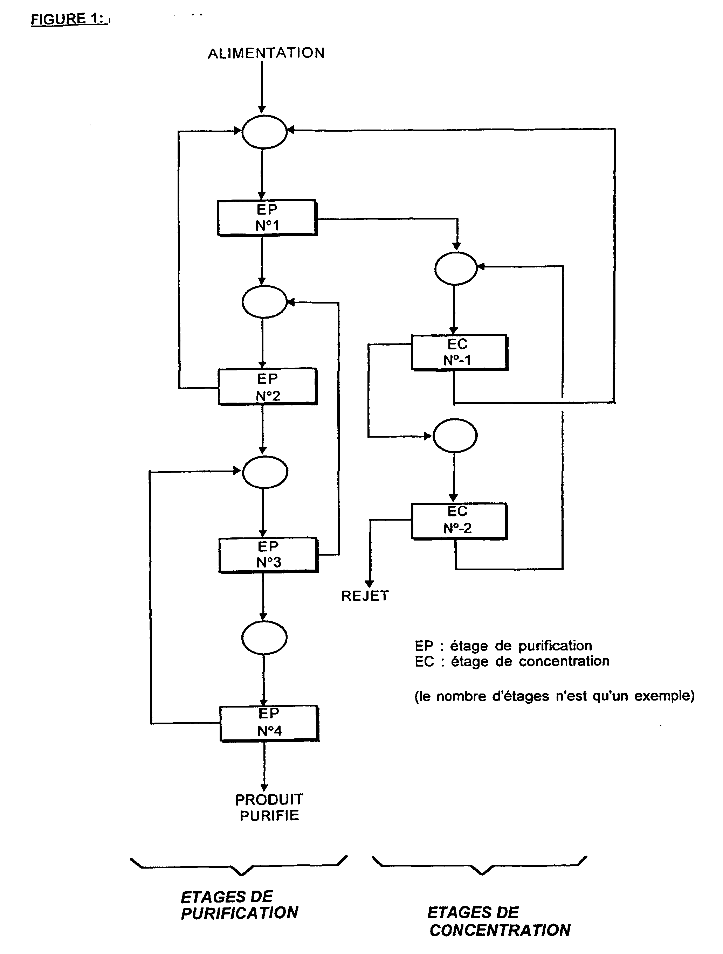

On connaît dans l'art antérieur trois types de procédé de purification de produits organiques par cristallisation :
- La cristallisation continue dans laquelle les cristaux sont formés dans un cristallisoir et maintenus en suspension. La bouillie de cristaux est ensuite envoyée vers un système de séparation généralement constitué d'une centrifugeuse ou une colonne de lavage.
- La cristallisation statique qui est un procédé discontinu mettant en oeuvre un appareil équipé d'un dispositif de transfert de chaleur. Cet appareil est d'abord rempli du produit brut, lequel est alors entièrement liquide. L'appareil est ensuite refroidi pour générer des cristaux (étape de cristallisation). Ces cristaux adhèrent aux parois. Lorsqu'une quantité de cristaux suffisante est formée, le liquide, chargé en impureté, est égoutté gravitairement (étape d'égouttage). Pour augmenter la pureté du produit restant dans l'appareil, une fusion partielle des cristaux peut être faite (purification du liquide résiduel). C'est l'étape de ressuage. Ensuite, les cristaux sont fondus pour obtenir le produit purifié sous forme liquide (étape de fusion). L'ensemble de ces étapes constitue un étage. On parle généralement d'étage de purification lorsque les étapes ci-dessus sont destinées à purifier le produit, et d'étage de concentration lorsque les étapes sont destinées à concentrer les impuretés (amélioration du rendement). La figure 1 en annexe montre les recyclages qui sont opérés lorsque plusieurs étages sont nécessaires. Dans le cas du procédé statique, les cristaux peuvent croître dans l'ensemble du volume du cristalliseur. A la fin de l'étape de cristallisation, ils constituent un réseau de porosité relativement constante. Lors de l'étape d'égouttage, le liquide s'écoule à travers ce réseau. Il est donc recommandé de limiter la hauteur de l'appareil pour que l'étape d'égouttage s'effectue en un temps acceptable.
- La cristallisation dynamique est également un procédé discontinu, et les phases du procédé sont identiques à celles de la cristallisation statique. La différence principale réside dans le fait que le produit circule dans l'appareil pendant la phase de cristallisation. Dans le cas du procédé dynamique, le produit qui cristallise circule à l'intérieur de tubes. Du fait du mouvement du produit, la cristallisation se fait en couche. A la fin de l'étape de cristallisation, chaque tube contient donc une couche de cristaux adhérents à la paroi, et un puits central, contenant le liquide de rejet. L'étape d'égouttage consiste à vidanger ce puits central. C'est une étape courte (quelques minutes) et l'appareil peut être de hauteur importante sans nuire à l'efficacité de l'étape.

Le procédé de cristallisation continue présente les inconvénients majeurs de générer une bouillie de cristaux souvent difficile à véhiculer ou à pomper, et de mettre en oeuvre beaucoup de mécanique (agitateurs, surfaces raclées, centrifugeuses, etc...) occasionnant des problèmes de maintenance.

On préfère donc les procédés de cristallisation statique ou dynamique où tous les transferts de produit se font en phase liquide et dans lesquels aucune mécanique n'est mise en oeuvre à l'exception des pompes.

En outre, la cristallisation dynamique offre l'avantage de temps de cycle courts par rapport à la cristallisation statique, ce qui dans certains cas peut présenter des avantages économiques. En revanche, le facteur de purification par étage est souvent moins bon. De plus, certains produits, lorsque leur teneur en impuretés est trop importante, ne peuvent être purifiés par cette voie.

Il a également été proposé dans l'art antérieur de combiner les procédés statique et dynamique. En effet, la pureté requise de certains produits nécessite une purification en plusieurs étages. Le rendement de l'opération nécessite également plusieurs étages de concentration.

Lorsque plusieurs étages sont nécessaires, et lorsque la capacité à traiter est importante, l'utilisation du procédé dynamique peut présenter un intérêt sur le plan de l'investissement (volume installé moins important que dans le cas du procédé statique).

Cependant, cette utilisation du procédé dynamique n'est parfois possible que pour les étages de purification, quand la teneur en impuretés est faible. Lorsque cette teneur en impuretés devient trop importante, la forme et la taille des cristaux ne permet pas une bonne adhérence aux parois, et ceux-ci sont entraînés par le produit qui circule.

C'est la raison pour laquelle les procédés statique et dynamique sont parfois combinés :
- utilisation du procédé dynamique dans les étages de purification (et parfois dans les premiers étages de concentration) pour réduire le volume installé,
- utilisation du procédé statique dans les derniers étages de concentration, car le liquide étant immobile, les cristaux peuvent adhérer correctement à la paroi et la séparation solide / liquide est possible.

Toutefois, la combinaison des procédés statique et dynamique présente deux inconvénients majeurs :
- Dans les procédés dynamiques, la vitesse de circulation du produit est fixée soit par la gravité lorsqu'il s'agit d'un procédé à film tombant, comme proposé dans le brevet européen No. 616 998, soit par le débit de circulation de la pompe lorsqu'il s'agit d'un procédé à tube rempli. L'inconvénient de ces procédés est que la vitesse de circulation n'est jamais la vitesse correspondant le mieux à la teneur en impuretés du produit.
- La nécessité de passage du procédé dynamique au procédé statique se fait lorsque, pour un étage, la vitesse de circulation ne permet plus une adhérence correcte des cristaux à la paroi. Le passage au procédé statique engendre plusieurs inconvénients, d'une part le volume de certains étages est alors plus important que si l'étage était opéré à vitesse de circulation réduite, d'autre part, deux procédés sont mis en oeuvre, ce qui augmente la complexité de l'installation.

La présente invention vise précisément à pallier ces inconvénients en offrant un procédé de purification permettant de prendre en compte la teneur en impuretés du produit et simple de mise en oeuvre. Ce but est atteint grâce à un procédé de purification d'un produit organique par cristallisation fractionnée, caractérisé en ce que le produit organique est purifié par circulation dans des tubes remplis en faisant varier la vitesse de circulation à chaque étage de purification et de concentration.

Le procédé de l'invention est remarquable en ce qu'il permet de choisir la vitesse de circulation correspondant au meilleur compromis facteur de purification/volume installé. Ainsi, la vitesse de circulation dans les derniers étages de purification est supérieure à la vitesse de circulation dans les derniers étages de concentration.

On préfère tout particulièrement choisir une vitesse rapide dans les derniers étages de purification et une vitesse très faible dans les derniers étages de concentration. De préférence, la vitesse très faible est de l'ordre de 5 à 10 fois plus faible que la vitesse importante.

On entend plus particulièrement par vitesse importante, une vitesse du produit dans les tubes comprise entre environ 0,5 et 1,2 m/s, et de préférence entre environ 0,7 et 1,0 m/s.

On entend plus particulièrement par vitesse très faible, une vitesse du produit dans les tubes comprise entre environ 0,05 et 0,2 ms, et de préférence entre environ 0,1 et 0,15 m/s.

Ces vitesses sont fonctions de la nature du produit à purifier. Ainsi, le procédé de l'invention peut s'appliquer à tout produit organique, comme le naphtalène, l'acide acrylique, l'acide benzoïque, etc....

Le procédé de l'invention est du type comprenant, comme indiqué précédemment à propos du procédé statique, la mise en oeuvre d'un dispositif comprenant un ou plusieurs cristalliseurs équipé(s) d'un système de transfert de chaleur. Le dispositif est d'abord rempli de la matière que l'on souhaite purifier. Celle-ci est alors entièrement liquide. Puis celle-ci est soumise aux étapes de cristallisation, d'égouttage, de purification du liquide résiduel, et de fusion, constituant l'étage de purification lorsqu'elles sont destinées à purifier le produit, et l'étage de concentration lorsqu'elles sont destinées à concentrer les impuretés.

Les travaux de recherche réalisés par la Demanderesse ont mis en évidence que plus la vitesse de circulation du produit pour un étage est faible, plus les cristaux se répartissent en réseau homogène. Il est donc nécessaire de limiter la hauteur des tubes afin que l'égouttage s'effectue correctement quelle que soit la vitesse de circulation du produit. En outre, il est important de conserver l'avantage du faible encombrement au sol que présente les appareils dynamiques du fait de leur grande hauteur.

Les deux aspects ci-dessus ont conduit à concevoir un procédé où le produit peut circuler dans la totalité des tubes pendant la phase de cristallisation, mais où le liquide s'écoule à travers une hauteur limitée de cristaux pendant la phase d'égouttage.

La présente invention concerne donc également un dispositif pour la mise en oeuvre du procédé ci-dessus. Ce dispositif est du type comprenant au moins un cristalliseur du type à tube, constituant une zone de tubes, complètement parcourue par le courant de produit, des réservoirs pour l'alimentation du dispositif en produit brut, la circulation et l'égouttage des produits intermédiaires et purifiés, des canalisations pour le transport des produits des réservoirs dans le ou les cristalliseur vice-versa, des robinets permettant de mettre les zones de tubes en série ou d'assurer l'égouttage et de chaque zone de tube, pour adapter le débit de circulation du produit pour chaque étage, des pompes de circulation équipées d'un variateur de vitesse.

En outre comme indiqué précédemment, la Demanderesse a conçu un dispositif où le produit peut circuler dans la totalité des tubes pendant la phase de cristallisation, mais où le liquide s'écoule à travers une hauteur limitée de cristaux pendant la phase d'égouttage.

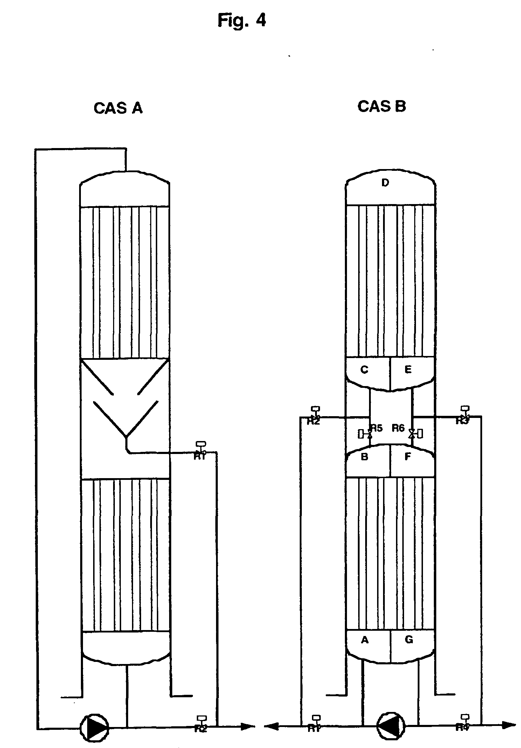

Plusieurs formes de mises en oeuvre de ce principe peuvent être retenues pour réaliser cette fonction. La figure 4 en montre deux exemples :

Dans le CAS A, le dispositif comprend un déversoir séparant chaque zone de tube. En phase de cristallisation, les robinets (R1 et R2) sont fermés et le produit circule d'une zone à l'autre (fonctionnement en une passe). En phase d'égouttage les robinets (R1 et R2) sont ouverts pour permettre l'écoulement de chaque zone séparément.

Dans le CAS B, le dispositif comprend des compartiments de circulation et d'égouttage. Un jeu de robinets automatiques permet de mettre chaque zone de tubes en série ou d'assurer l'égouttage de chacune séparément. Ainsi, pendant la phase de cristallisation, le produit circule par l'intermédiaire de la pompe dans l'ensemble des compartiments (A, B, C, D, E, F et G) successivement (fonctionnement en deux passes). Les robinets automatiques d'alimentation (R1, R2, R3 et R4) sont fermés et les robinets entre les zones de tubes (R5 et R6) sont ouverts. Pendant la phase d'égouttage, la pompe est arrêtée, les robinets entre les zones de tubes (R5 et R6) sont fermés et le produit s'écoule dans une partie seulement des compartiments (A, C, E, et G) séparément.

Le système d'égouttage de chaque zone de tubes peut être de plusieurs types soit à compartiment soit à déversoir. La figure 4 en représente le principe en montrant deux zones de tubes, mais le nombre de zones pour un même dispositif peut être supérieur.

D'autres avantages et caractéristiques de l'invention apparaîtront dans les exemples qui suivent qui se réfèrent aux figures en annexe dans lesquelles :
- La figure 1 est une représentation schématique du principe d'un procédé de purification à plusieurs étages.
- La figure 2 est une représentation schématique du principe d'un procédé de purification par cristallisation statique de l'art antérieur.
- La figure 3 est une représentation schématique du principe d'un procédé de purification par cristallisation dynamique de l'art antérieur.
- La figure 4 est une représentation schématique de deux formes de réalisation (CAS A, CAS B) du procédé et du dispositif de l'invention où le produit peut circuler dans la totalité des tubes pendant la phase de cristallisation, mais où le liquide s'écoule à travers une hauteur limitée de cristaux pendant la phase d'égouttage.
- La figure 5 est une représentation schématique d'une forme de réalisation du procédé de l'invention et du dispositif associé, mis en oeuvre dans le cas de la purification du naphtalène.

La figure 1 est une représentation schématique du principe d'un procédé de purification à plusieurs étages. Dans cette figure "EP" indique les étages de purification, quatre dans le cas de l'exemple de la figure 1, et "EC" représente les étages de concentration, deux dans l'exemple de la figure 1. La figure 1 en annexe montre e outre les recyclages qui sont opérés lorsque plusieurs étages sont nécessaires.

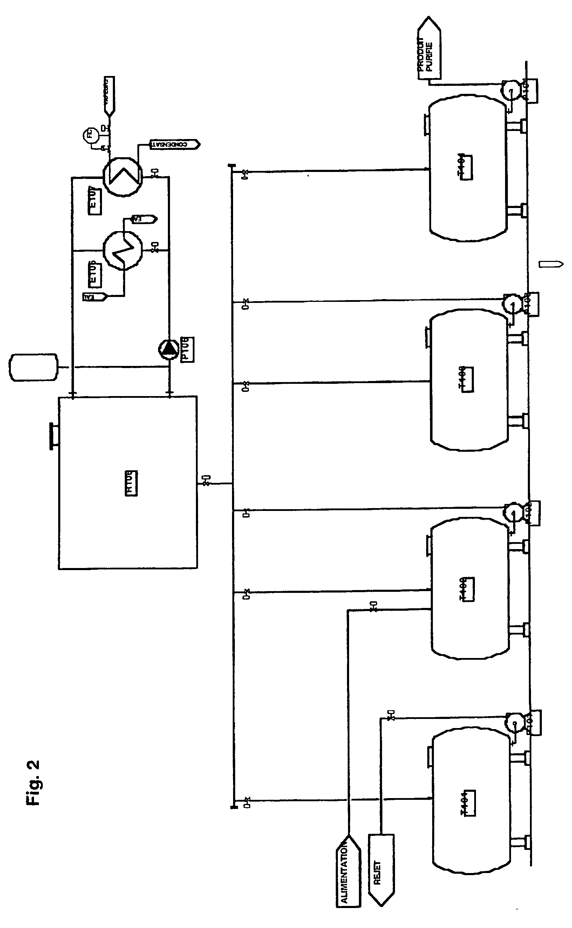

La figure 2 est une représentation schématique du principe d'un procédé de purification par cristallisation statique de l'art antérieur. Dans cette figure, un cristalliseur R106 est utilisé pour réaliser deux étages de purification. Le produit à traiter est stocké dans le réservoir T102. L'alimentation du cristalliseur pour le premier étage de purification se fait par la pompe P102. Le produit reste ensuite immobile dans le cristalliseur pendant l'étape de cristallisation. Le rejet de cet étage est vidangé gravitairement dans le réservoir T101 et le produit ayant subi une première purification dans le réservoir T103. De ce réservoir, le produit est envoyé dans le cristalliseur par la pompe P103 pour un deuxième étage de purification. Le produit reste également immobile dans le cristalliseur pendant l'étape de cristallisation. Le rejet de cet étage est vidangé gravitairement dans le réservoir T102 et le produit purifié dans le réservoir T104. Un fluide thermique circule dans le cristalliseur par la pompe P106. Les énergies de chauffage et de refroidissement sont apportées par les échangeurs E106 et E107.

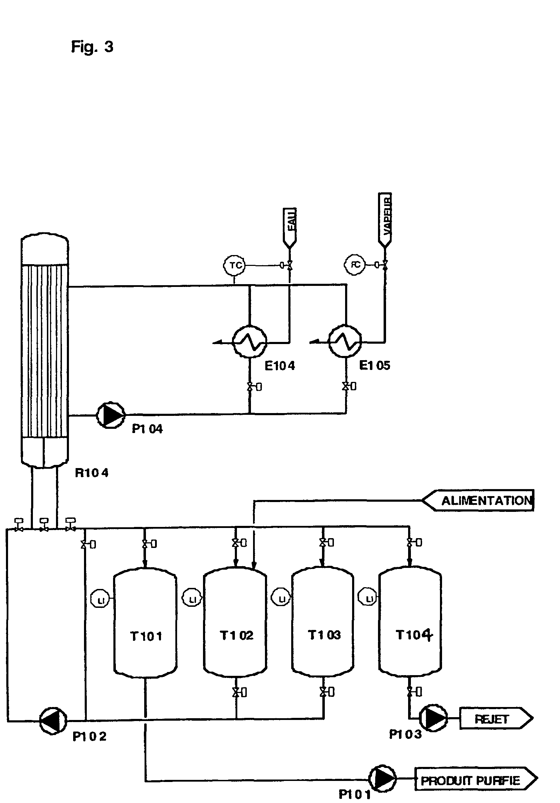

La figure 3 est une représentation schématique du principe d'un procédé de purification par cristallisation dynamique tubes remplis de l'art antérieur. Dans cette figure, un cristalliseur (R104) est utilisé pour réaliser deux étages de purification. Le produit à traiter est stocké dans le réservoir T102. L'alimentation du cristalliseur pour le premier étage de purification se fait par la pompe P102, qui est aussi utilisée pour faire circuler le produit dans l'appareil pendant l'étape de cristallisation. Le rejet de cet étage est vidangé gravitairement dans le réservoir T101 et le produit ayant subi une première purification dans le réservoir T103. De ce réservoir, le produit est envoyé dans le cristalliseur par la même pompe P102 pour un deuxième étage de purification. Cette pompe sert également à faire circuler le produit dans l'appareil pendant cette deuxième étape de cristallisation. Le rejet de cet étage est vidangé gravitairement dans le réservoir T102 et le produit purifié dans le réservoir T104. Un fluide thermique circule dans le cristalliseur par la pompe P104. Les énergies de chauffage et de refroidissement sont apportées par les échangeurs E104 et E105.Dans ce procédé, une vitesse de circulation importante et identique pour les deux étages est utilisée.

La figure 4 est une représentation schématique de deux formes de réalisation (CAS A, CAS B) du procédé et du dispositif de l'invention où le produit peut circuler dans la totalité des tubes pendant la phase de cristallisation, mais où le liquide s'écoule à travers une hauteur limitée de cristaux pendant la phase d'égouttage.

Une configuration correspondant au cas A peut être utilisée lorsque la capacité de produit à traiter est limitée et qu'en conséquence le diamètre de l'appareil est faible. Dans ce cas, l'appareil peut fonctionner en une seule passe. Cette configuration limite le nombre de robinets automatiques mis en jeu.

Une configuration correspondant au cas B est utilisée lorsque la capacité de produit à traiter est importante et que le diamètre de l'appareil est grand. Dans ce cas, pour que le débit de la pompe de circulation du produit reste acceptable, l'appareil doit comporter plusieurs passes. Des robinets automatiques entre compartiments tels que montrés dans la figure 4 (R2, R3, R5, R6) sont alors nécessaires.

### Exemple : Purification du naphtalène selon le procédé de l'invention.

La purification du naphtalène, au stade industriel, se fait généralement de deux façons :
- soit en utilisant le procédé statique seul,
- soit en utilisant une combinaison du procédé statique et dynamique, le procédé dynamique ne pouvant être utilisé pour les derniers étages de concentration.

Le procédé de l'invention présente les avantages suivants par rapport à ces deux procédés de l'art antérieur.

Par rapport à l'utilisation du procédé statique seul, le procédé de l'invention présente un avantage d'implantation. En effet, la configuration verticale du dispositif pour sa mise en oeuvre permet de réduire la place nécessaire au sol. En outre, la vitesse de circulation de chaque étage peut être ajustée pour obtenir le meilleur compromis efficacité de la séparation/temps. En conséquence, le volume d'appareil mis en oeuvre est optimisé.

Par rapport à l'utilisation d'une combinaison statique / dynamique, le procédé de l'invention présente également un gain de place par rapport à une installation où deux types d'appareils doivent être installés. En outre, pour des capacités réduites, un seul appareil peut être utilisé, ce qui ne peut pas être le cas lorsque que l'on combine les deux procédés. Enfin, pour les étages de purification essentiellement, la vitesse de circulation de chaque étage pouvant être ajustée, les consommations électriques (pompes) sont réduites.

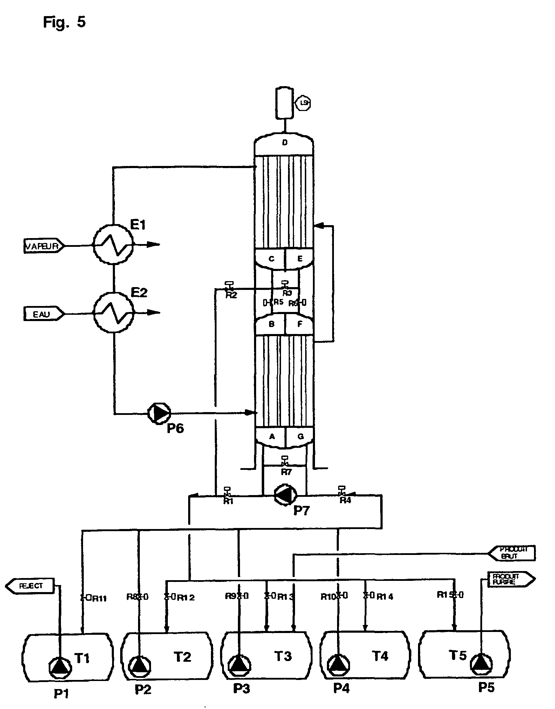

Comme montré à la figure 5, la purification de naphtalène selon le procédé de l'invention se fait en 3 étages : 2 étages de purification et un étage de concentration des rejets.

### 1) Description du premier étage.

Le produit brut à traiter arrive dans le réservoir T3. De ce réservoir, le cristalliseur est alimenté par la pompe P3. Les vannes R9, R4, R7, R5, R6 sont alors ouvertes. Pendant ce remplissage, le cristalliseur est refroidi par l'intermédiaire de l'échangeur de chaleur E2.

Lorsque le cristalliseur est rempli, les vannes R4, R7 et R9 sont fermées, la pompe P7 est mise en service, et le produit circule dans l'appareil. Le débit de la pompe est ajusté par un variateur pour obtenir une vitesse de circulation dans les tubes prédéterminée. Par exemple, pour ce premier étage, une vitesse de l'ordre de 0,8m/s est visée.

Le refroidissement se poursuit alors jusqu'à obtention de la quantité de cristaux voulue dans l'appareil.

Ensuite, on procède à l'étape d'égouttage du liquide qui s'est concentré en impuretés. Ainsi que décrit précédemment, cet égouttage se fait à travers des hauteurs d'appareil limitées. De bons résultats sont obtenus pour des hauteurs de 2 m à 2,5 m. Cet égouttage est envoyé dans le réservoir T2. Pour cela, les vannes R1, R2, R3, R7, et R12 sont ouvertes.

Lorsque cet égouttage est effectué, un ressuage ou fusion partielle des cristaux permet d'améliorer la pureté de la masse restant dans l'appareil. Ce ressuage est fait en réchauffant l'appareil par l'intermédiaire de l'échangeur E1. Le flux sortant du cristalliseur est envoyé dans le réservoir T3 (fermeture de R12 et ouverture de R13).

Enfin, lorsque la pureté requise en fin d'étage est atteinte, la masse cristalline est complètement fondue, et le produit est envoyé dans le réservoir intermédiaire T4.

### 2) Description des autres étages.

Le principe des autres étages est identique, mais les niveaux de température, les vitesses de circulation du produit et les réservoirs mis en oeuvre diffèrent :
- Pour l'étage de concentration, l'alimentation se fait à partir du réservoir T2, l'égouttage dans le réservoir T1 (rejet final), le ressuage dans le réservoir T2 et la fusion dans le réservoir T3. Une vitesse de circulation plus faible est recommandée (0.1m/s par exemple).
- Pour le dernier étage de purification, l'alimentation se fait à partir du réservoir T4, l'égouttage dans le réservoir T3, le ressuage dans le réservoir T4 et la fusion dans le réservoir T5 (produit purifié). Une vitesse de circulation importante donne de bons résultats (1m/s).

## Revendications

1. Procédé de purification d'un produit organique par cristallisation fractionnée, **caractérisé en ce que** le produit organique est purifié par circulation dans des tubes remplis en faisant varier la vitesse de circulation à chaque étage de purification et de concentration, la vitesse de circulation dans les derniers étages de purification étant supérieure à la vitesse de circulation dans les derniers étages de concentration.

2. Procédé selon la revendication 1, **caractérisé en ce que** la vitesse de circulation est rapide dans les derniers étages de purification et très faible dans les derniers étages de concentration.

3. Procédé selon la revendication 2, **caractérisé en ce que** la vitesse très faible est de l'ordre de 5 à 10 fois plus faible que la vitesse importante.

4. Procédé selon l'une des revendications 2 ou 3, **caractérisé en ce que** la vitesse rapide dans les derniers étages de purification est comprise entre environ 0,5 et 1,2 m/s, et de préférence entre environ 0,7 et 1,0 m/s, et **en ce que** la vitesse très faible dans les derniers étages de concentration est comprise entre environ 0,05 et 0,2 ms, et de préférence entre environ 0,1 et 0,15 m/s.

5. Procédé selon l'une quelconque des revendications précédentes, **caractérisé en ce que** le produit peut circuler dans la totalité des tubes pendant la phase de cristallisation, mais s'écoule à travers une hauteur limitée de cristaux pendant la phase d'égouttage.

6. Dispositif pour la cristallisation fractionnée d'un produit organique, comprenant au moins un cristalliseur du type à tube, constituant une zone de tubes, complètement parcourue par le courant de produit, des réservoirs pour l'alimentation du dispositif en produit brut, la circulation et l'égouttage des produits intermédiaires et purifiés, des canalisations pour le transport des produits des réservoirs dans le ou les cristalliseur vice-versa, des robinets permettant de mettre les zones de tubes en série ou d'assurer l'égouttage et de chaque zone de tube, **caractérisé en ce qu'**il comprend pour adapter le débit de circulation du produit pour chaque étage, des pompes de circulation équipée(s) d'un variateur de vitesse.

7. Dispositif selon la revendication 6, **caractérisé en ce qu'**il comprend des compartiments de circulation et d'égouttage et un jeu de robinets automatiques permettant de mettre chaque zone de tubes en série ou d'assurer l'égouttage de chacune des zones séparément.

8. Dispositif selon la revendication 6, **caractérisé en ce qu'**il comprend un déversoir séparant chaque zone de tubes et des robinets permettant l'écoulement de chaque zone séparément.

9. Dispositif selon la revendication 6, **caractérisé en ce qu'**il comprend plusieurs zones de tubes et **en ce que** le système d'égouttage de chaque zone identique ou différent est choisi parmi :
- des compartiments d'égouttage, et un jeu de robinets automatiques permettant de mettre chaque zone de tubes en série ou d'assurer l'égouttage de chacune des zones séparément,
- un déversoir séparant chaque zone de tubes et des robinets permettant l'écoulement de chaque zone séparément.

## Patentansprüche

1. Verfahren der Reinigung eines organischen Produktes durch fraktionierte Kristallisierung, **dadurch gekennzeichnet, dass** das organische Produkt gereinigt wird durch Umlauf in gefüllten Röhren indem die Umlaufgeschwindigkeit variiert wird bei jeder Etage der Reinigung und der Konzentration, wobei die Umlaufgeschwindigkeit in den letzten Reinigungsetagen höher als die Umlaufgeschwindigkeit in den letzten Konzentrationsetagen ist.

2. Verfahren nach Anspruch 1, **dadurch gekennzeichnet, dass** die Umlaufgeschwindigkeit in den letzten Reinigungsetagen schnell ist und in den letzten Konzentrationsetagen sehr langsam ist.

3. Verfahren nach Anspruch 2, **dadurch gekennzeichnet, dass** die sehr langsame Geschwindigkeit in der Größenordnung von 5 bis 10 Mal geringer als die wichtige Geschwindigkeit ist.

4. Verfahren nach einem der Ansprüche 2 oder 3, **dadurch gekennzeichnet, dass** die schnelle Geschwindigkeit in den letzten Etagen der Reinigung sich zwischen 0,5 und 1,2 m/s vorzugsweise zwischen ungefähr 0,7 und 1,0 m/s situiert und dass die sehr langsame Geschwindigkeit in den letzten Etagen der Konzentration sich zwischen ungefähr 0,05 und 0,2 m/s vorzugsweise zwischen ungefähr 0,1 und 0,15 m/s situiert.

5. Verfahren nach einem der vorigen Ansprüche, **dadurch gekennzeichnet, dass** das Produkt in der Gesamtheit der Röhren während der Kristallisierungsphase zirkulieren kann, aber durch eine begrenzte Höhe von Kristallen während der Entwässerungsphase fließt.

6. Vorrichtung für die fraktionierte Kristallisierung eines organischen Produkts, beinhaltend wenigstens einen Kristallisierer des Typs mit Röhren, bildend eine Röhrenzone, total durchlaufen durch den Produktstrom, Behälter für die Speisung der Vorrichtung mit rohem Produkt, das Zirkulieren und Entwässern der Zwischenprodukte und des gereinigten Produkts, Kanalisierungen für den Transport der Produkte von den Behältern in den oder die Kristallisierer und umgekehrt, Hähne welche es erlauben die Röhrenzonen in Serie zu bringen und um die Entwässerung von jeder Röhrenzone zu sichern, **dadurch gekennzeichnet, dass** sie um den Umlaufdurchfluss des Produkts für jede Etage anzupassen, Umlaufpumpen ausgestattet mit einem Geschwindigkeitssteller umfasst.

7. Vorrichtung nach Anspruch 6, **dadurch gekennzeichnet, dass** sie Umlauf- und Entwässerungsabteile und eine Serie von automatischen Hähnen, welche es erlauben jede Röhrenzone in Serie zu bringen oder um die Entwässerung jeder Zone separat zu erlauben umfasst.

8. Vorrichtung nach Anspruch 6, **dadurch gekennzeichnet, dass** sie ein Sammelbecken enthält, welches jede Röhrenzone trennt und Hähne, welche den Abfluss jeder Zone separat erlauben.

9. Vorrichtung nach Anspruch 6, **dadurch gekennzeichnet, dass** sie mehrere Röhrenzonen enthält und dass das Entwässerungssystem jeder Zone identisch oder unterschiedlich, ausgewählt ist aus:
- Entwässerungsabteile und eine Serie von automatischen Hähnen, welche es erlauben jede Röhrenzone in Serie zu bringen oder die Entwässerung jeder Zone separat zu versichern,
- Ein Sammelbecken, welches jede Röhrenzone trennt und Hähne, welche es erlauben jede Zone separat ablaufen zu lassen.

## Claims

1. Method for purification of an organic product by fractioned crystallisation, **characterised in that** the organic product is purified by circulation in filled tubes by varying the circulation velocity at each purification and concentration stage, the circulation velocity in the final purification stages being greater than the circulation velocity in the final concentration stages.

2. Method according to claim 1, **characterised in that** the circulation velocity is high in the last purification stages and very low in the last concentration stages.

3. Method according to claim 2, **characterised in that** the very low velocity is about 5 to 10 times lower than the high velocity.

4. Method according to one of claims 2 or 3, **characterised in that** the high velocity in the final purification stages is between about 0.5 and 1.2 m/s and is preferably between about 0.7 and 1.0 m/s, and **in that** the very low velocity in the final concentration stages is between about 0.05 and 0.2 ms and preferably between about 0.1 and 0.15 m/s.

5. Method according to any one of the previous claims, **characterised in that** the product may circulate in all tubes during the crystallisation phase, but flows through a limited height of crystals during the dripping phase.

6. Device for fractioned crystallisation of an organic product, comprising at least one tube type crystalliser forming an area of tubes through which the entire product current passes, reservoirs for supplying an unprocessed product to the device, circulation and draining of intermediate and purified products, pipes for the transport of products from the reservoirs into the crystalliser(s) or vice versa, valves for putting areas of tubes into series or for draining each area of the tube, **characterised in that** it comprises circulation pumps equipped with a speed variator, to adapt the product circulation flow for each stage.

7. Device according to claim 6, **characterised in that** it comprises circulation and draining compartments and a set of automatic valves for putting each area of tubes into series or for draining each area separately.

8. Device according to claim 6, **characterised in that** it comprises a weir separating each area of tubes and valves controlling flow in each area separately.

9. Device according to claim 6, **characterised in that** it comprises several areas of tubes and **in that** the drain system of each identical area or different area is chosen from among:
- draining compartments and a set of automatic valves for putting each area of tubes into series or for draining each area separately,
- a weir separating each area of tubes and valves so that each area can flow separately.
